# EUROPÄISCHE PATENTSCHRIFT

(11) **EP 3 219 756 B1**
(45) Veröffentlichungstag und Bekanntmachung des Hinweises auf die Patenterteilung: **06.06.2018**
(21) Anmeldenummer: 16000650.8
(22) Anmeldetag: 17.03.2016
(51) Int. Cl.: C08L 61/02, C08L 89/06, C08L 97/02

(54) **FORMALDEHYDFREIES HOLZBINDEMITTEL**
FORMALDEHYDE-FREE WOOD BINDER
LIANT DE BOIS SANS FORMALDEHYDE

(43) Veröffentlichungstag der Anmeldung: 20.09.2017
(73) Patentinhaber: Sestec Sp. z o.o., 31-864 Krakow (PL)
(72) Erfinder: EDELMANN, Hans-Joachim, 38662 Bad Harzburg (DE); SANDER, Oswald, 37539 Bad Grund (DE)
(74) Vertreter: Uexküll & Stolberg

(56) Entgegenhaltungen:
- WO-A1-2015/086035
- WO-A1-2015/086074
- DE-A1-102014 105 879

## Beschreibung

Die Erfindung betrifft ein formaldehydfreies Bindemittel für cellulosehaltige Materialien, insbesondere für Holz und Papier, sowie ein zugehöriges Verbundwerkstoffprodukt, beispielsweise in Form einer Platte.

Der Begriff "Bindemittel" wird häufig für Verbundwerkstoffe verwendet und bezeichnet einen Stoff oder ein Mittel, das innerhalb des Verbundwerkstoffs verschiedene Substrate bzw. Materialien miteinander verklebt oder "verbindet". Das Bindemittel für cellulosehaltige Materialien kann synonym auch als Klebstoff bezeichnet werden; es bindet stückige Materialien oder ausgedehntere Substrate adhäsiv und/oder kohäsiv, einschließlich reaktiv.

"Cellulosehaltige Materialien" enthalten Cellulose, Hemicellulose, Holocellulose oder Lignocellulose und damit auch Lignin. Cellulosehaltige Materialien sind demnach u.a. Holz, Zellstoff, Stroh, Bagasse, Kenaf, Bambus, Sisal, Hanf, Kokosfaser und Papier, um nur die wichtigsten zu nennen. In Europa besitzen derzeit Holz- und Papier-Verbundmaterialien noch die größte Bedeutung.

Als Grundstoffe für Verbundwerkstoffprodukte mit den vorgenannten Materialien und geeigneten Bindemitteln sind vor allem Vollholz, Holzschnitzel, Sägespäne, Holzschliff, Holzmehl, Holzstoff usw., auch in Form von Recyclingstoffen, wie Altholz oder Altpapier zu nennen.

Für holzbasierte Verbundwerkstoffe werden industriell in großem Maßstab Aminharze (auch Aminoharze oder Aminoplaste genannt), Amidharze und Harze aromatischer Hydroxyverbindungen, wie z.B. Phenolharze, verwendet. Diese Verbindungen werden im Bindemittel als relativ niedermolekular vernetzte, aushärtbare Harze bereitgestellt, die u.a. unter der Einwirkung von Hitze bei der Verarbeitung zu Verbundwerkstoff-Formkörpern härten. Nach Aushärtung liegt eine duroplastische Vernetzung vor. Diese weit verbreiteten aminoplastischen Bindemittelharze werden durch Polykondensation von Carbonylverbindungen und NH-gruppenhaltigen Verbindungen gewonnen. Die Carbonylverbindungen können Aldehyde oder Ketone sein, häufiger Aldehyde, und die damit vernetzenden Stickstoffverbindungen können sehr vielfältig sein, wobei die bedeutendsten Harzgruppen Harnstoffharze (UF), Melaminharze (MF) und Dicyandiamidharze (DD) sind. Wasserbasierte Harze - niedermolekular kondensierte, noch nicht gehärtete Harze der vorstehenden Art in wässriger Lösung - heißen auch Leimharze. Auch diese Erfindung befasst sich in erster Linie mit Bindemittelleimen, d.h. wasserbasierten Bindemitteln bzw. wässrigen Bindemittellösungen. Diese können generell auch als sprühgetrocknete Pulver in Formmassen verwendet werden.

Die gängigen Holzbindemittel auf Aminoplastbasis haben verschiedene Nachteile. Zum Abbinden ist eine Härtung erforderlich, die nach Anregung in einem bestimm- ten Zeitfenster abläuft. Dieses Zeitfenster kann schwer reguliert werden. Fertigungsunterbrechungen sind daher problematisch. Ein weiterer bedeutender Nachteil sind Emissionen der fertigen Verbundwerkstoffprodukte. Auch heute noch wird in großem Maßstab preisgünstiges und gut bindendes Formaldehyd eingesetzt, vor allem in UF- und MF-Harzen, die einen großen Marktanteil besitzen, obwohl die damit verbundenen Emissionsprobleme bekannt sind. Um das Problem zu lösen, wird in der Regel versucht, die Emission des Formaldehyds herunterzusetzen, es also so fest einzubinden, dass es nicht entweichen kann. Die Erfolge in dieser Richtung sind begrenzt.

Seit 1. April 2015 ist die EU-Verordnung 605/2014 in Kraft, in der die Emissionsgrenzwerte für das als besonders krebserregend eingestufte Formaldehyd in Produktionsanlagen von 20 mg/m³ auf 1 mg/m³ abgesenkt wurden. Mit der Umsetzung ist bis August 2017 zu rechnen (REACH-Verordnung). Bindemittel ohne Formaldehydemissionen sind daher von großem Interesse.

Es wird seit langem versucht, Formaldehyd durch andere Aldehyde oder Ketone zu ersetzen. Dabei dürfen die Materialien nicht zu kostspielig sein, und die geforderten Werkstoffeigenschaften müssen mit dem Ersatzmittel erzielt werden können. Wichtig sind schnelles Abbinden und gute mechanische Stabilität.

Aus der WO 2015/086074 A1 sind formaldehydfreie Harze basierend auf Hydroxyaldehyden bekannt, bei denen ein Hydroxy-Monoaldehyd mit einem Amin, einem Amid oder einer aromatischen Hydroxyverbindung umgesetzt wird. Als Amine oder Amide kommen insbesondere Harnstoff, Melamin, Benzoguanamin, Dicyandiamid, Acetylendiharnstoff, Aminotriacin, Diaminoalkane oder Diamidoalkane und Polyacrylamid in Frage. Als Hydroxy-Monoaldehyd wird bevorzugt Glycolaldehyd oder Glyzerinaldehyd oder ein Gemisch dieser Aldehyde verwendet. Die Hydroxy-Monoaldehyde werden in einem vorgelagerten Schritt gesondert erzeugt, vorzugsweise mit Hilfe einer sogenannten Umpolungsreaktion aus Formaldehyd. Das Verfahren ist daher relativ aufwändig, teuer und birgt die Gefahr, dass Formaldehydreste in die Mischung gelangen, wenn nicht klar getrennt zweistufig gefahren wird, was in der Praxis nochmals zu einer Verteuerung führt.

Glycolaldehyd und Glyzerinaldehyd mit der Summenformel (CH₂O)ₙ können als Kohlenhydrataldehyde aufgefasst werden. Mit der Nutzung solcher Aldehyde in Aminoharzen befasst sich auch bereits die US 4,172,057 A, bei der ein Hydroxyaldehyd oder -keton in ein Aminoharz, insbesondere ein Harnstoff-Formaldehydharz oder ein Melaminformaldehydharz, eingebracht wird. Im Beispiel wird zu den konventionellen Aminharzen Glycose hinzugegeben, um das Harz zu modifizieren. Das modifizierte Harz wird zu Fasern verarbeitet, die als Klebstoff für die Papierherstellung vorgesehen sind.

Aus der DE 10 2014 105 879 A1 ist schließlich ein Verfahren zur Herstellung eines Verbundwerkstoffs bekannt, der mindestens ein cellulosehaltiges Substrat und ein mehrkomponentiges Bindemittel aufweist. Dabei umfasst eine erste Komponente des Bindemittels Tierblut und eine zweite Komponente des Bindemittels mindestens ein Additiv aus einer Liste, die u.a. Harnstoff, Alaun, Glyzerin, Formaldehyd, Isocyanat, Hexamin, Aluminiumsalze, Säuren und Basen sowie Peroxid umfasst. Diese als Additive bezeichneten Substanzen können einzeln oder im Gemisch verwendet und mit der ersten Komponente kombiniert aufgetragen werden. Dies lässt eine Vielzahl von Möglichkeiten zu. Die angegebenen Beispiele sind sehr unterschiedlich und führen zu sehr heterogenen Ergebnissen. Die Produkte sind nicht formaldehydfrei , d.h. nicht emisionsfrei.

Demgegenüber liegt der Erfindung die Aufgabe zugrunde, ein unter ökologischen Gesichtspunkten unbedenkliches, strikt formaldehydfreies und damit emissionsfreies Bindemittel bereitzustellen, das für verschiedenste Verbundwerkstoffe und insbesondere Holz- und Papierverbundwerkstoffe verwendbar ist.

Das Mittel soll die Einhaltung der Emissionsnormen bei der Herstellung von Endprodukten wie Verbundwerkstoffen sicherstellen. Der Vorgang des Abbindens sollte möglichst kontrolliert und zügig verlaufen, um innerhalb von kontinuierlichen Herstellungsverfahren gute und reproduzierbare Ergebnisse zu liefern. Das neue Bindemittel sollte aus kostengünstigen Basisrohstoffen erhältlich sein und vorzugsweise als Einkomponentensystem lager- und transportfähig sein.

Diese Aufgaben werden gelöst mit einem Bindemittel nach Anspruch 1 und dem damit erhältlichen zugehörigen Verbundwerkstoffprodukt nach Anspruch 12.

Erfindungsgemäß wird ein Hydroxyaldehyd, was Mischungen mehrerer Hydroxyaldehyde einschließt, mit einem Ammoniumsalz polykondensiert und vernetzt. Die Bindungsmöglichkeiten in dem komplexen System zwischen Ammonium (NH₄⁺), Aldehyd und Zellulose-Strukturen sind vielfältig. Bei Anwesenheit einer Proteinkomponente greift diese zusätzlich in das System ein. Die Bindungsmöglichkeiten werden nachfolgend anhand von Abbildungen noch näher erläutert.

Überraschenderweise wurde gefunden, dass Ammoniumsalze mit Hydroxyaldehyden zu ausgezeichneten Bindemittelharzen kondensieren, die zellulosehaltige Materialien gut kleben bzw. binden und insbesondere in Verbundwerkstoffen mit zellulosehaltigen Materialien zu guten mechanischen Festigkeiten und insgesamt sehr befriedigenden Produktqualitäten führen. Es war bislang nicht erkannt worden, in welchem Umfang Ammoniumsalze in Bindemittelharzen, gerade auch in Ersatz von Harnstoff, eingesetzt werden können und welche Vorteile dies bietet.

Die grundsätzliche Reaktionsfähigkeit von Carbonylverbindungen mit Ammoniak und Ammonium-Kationen ist an sich seit langem bekannt, z.B. aus der Urotropin-Herstellung oder durch die Formol-Titration. Von dem Prinzip wurde jedoch bislang in dem hier beschriebenen Sinne kein Gebrauch gemacht.

Die Vernetzungsmöglichkeiten von Glyzerinaldehyd und entsprechend, nicht gesondert dargestellt, von Dihydroxyaceton, das als Koppelprodukt in Mischungen vorhanden sein kann, wie nachfolgend noch näher beschrieben, werden aus den Abbildungen 1 bis 3 klar. Andere Hydroxyaldehyde und verbundene Ketone würden entsprechend reagieren. Abbildung 1 zeigt schematisch die Anbindung des Glykols an eine Peptidoberfläche. Die Anbindung an cellulosehaltige Substrate erfolgt entsprechend über OH-Gruppen auf der Cellulose. Das Schema in Abbildung 2 widmet sich weiteren Kondensationsmöglichkeiten. Abbildung 3 würdigt schematisch besonders den Einfluss des Ammoniumsalzes, das einen zentralen Bestandteil der Erfindung bildet.

Das Bindemittel nach der Erfindung kann die sehr verbreiteten UF- und MF-Harze durch emissionsfreie, umweltverträgliche Produkte ersetzen. Bestimmte, hier geeignete Ammoniumsalze sind kommerziell erhältlich und in großer Menge preiswert verfügbar.

In vielen Ausführungsbeispielen ist der relativ hohe Ammoniumsalzgehalt auch für einen hohen Feststoffgehalt im Bindemittel verantwortlich. Der damit verbundene niedrige Wassergehalt, der vorzugsweise unter 50 Gew.-% betragen sollte, ist für einige Bindemittel-Anwendungen unerlässlich oder von Vorteil.

In bevorzugten Ausführungsformen wird das Ammoniumsalz oder die mehreren Ammoniumsalze in der Mischung in einem stöchiometrischen Verhältnis zum Hydroxyaldehyd eingesetzt. Zusätzlich neben den Ammoniumsalzen in untergeordneter Menge gegebenenfalls vorhandene Amine oder Amide - auch innerhalb einer Proteinkomponente enthaltene Amine oder Amide - werden bei der stöchiometrischen Zuordnung berücksichtigt, soweit erforderlich.

Bevorzugte Hydroxyaldehyde sind die Kohlenhydrataldehyde der Summenformel (CH₂O)ₙ, die Glycolaldehyd, Glyzerinaldehyd, Triosen und höhere Aldosen umfassen. Besonders bevorzugt ist Glyzerinaldehyd.

Im Rahmen der Erfindung wurde überraschend festgestellt, dass diese Hydroxyaldehyde und besonders Glyzerinaldehyd sehr vorteilhaft innerhalb des Bindemittels, also in situ, mit einem milden Oxidationsmittel aus wenigstens difunktionellen Hydroxyverbindungen (Polyolen) erzeugt werden können. Als Oxidationsmittel ist dabei Wasserstoffperoxid bevorzugt. In dem Bindemittel sind dann, in besonders bevorzugter Ausführungsform, wenigstens eine wenigstens difunktionelle Hydroxyverbindung, vorzugsweise Glycerin, und das Oxidationsmittel, vorzugsweise Wasserstoffperoxid, vorhanden, um in situ das Hydroxyaldehyd, vorzugsweise Glycerinaldehyd, zu bilden, welches dann mit dem Ammoniumsalz und ggf. weiteren in der Bindemittelmischung vorhandenen Substanzen zu dem Hydroxyaldehyd-Harz reagiert. Dieses bindet im Verlauf der Gesamtreaktion unter Wärme und Druck ab.

Es ist besonders erstaunlich, dass das Bindemittel mit allen Inhaltsstoffen einschließlich Diol oder Polyol und Peroxid, bzw. sonstigem Oxidationsmittel, lange Zeit, z.B. über ein Jahr, lagerfähig ist.

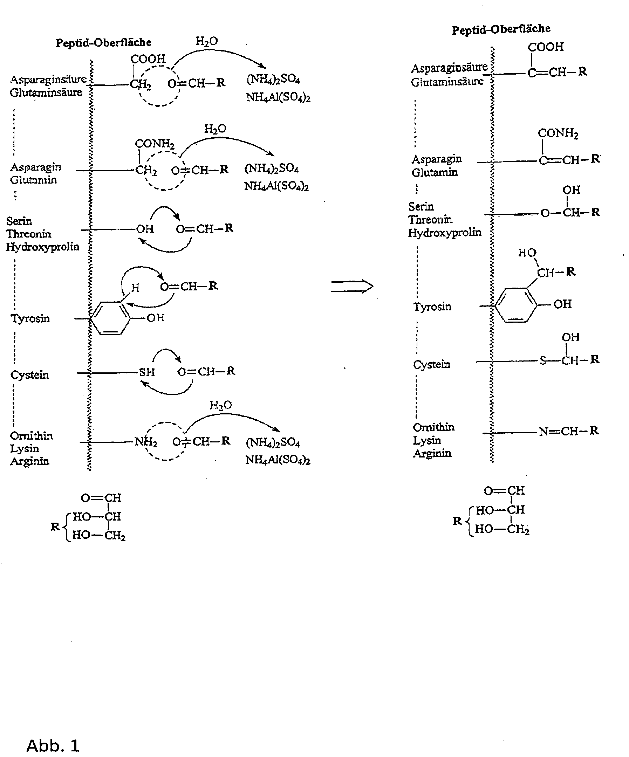

Die Bildung von Glyzerinaldehyd und Dihydroxyaceton aus Glyzerin erfolgt mit einem geeigneten milden Oxidationsmittel und vorzugsweise mit Wasserstoffperoxid. Das mitgebildete Dihydroxyaceton polykondensiert mit NH-reaktiven Komponenten (Ammoniumsalze, Melamin, Harnstoff) in entsprechender Weise wie der Aldehyd (siehe Abbildung 1). Diese beiden Verbindungen können sich über ein Endiol ineinander umlagern (Lobry-de-Bruyn-van-Ekenstein-Umlagerung). Es ist demnach nicht erforderlich, ein reines Aldehyd vorab zu erzeugen. Die Kombination von Ammoniumsalz, Polyol, nämlich bevorzugt Glyzerin, und Oxidationsmittel, bevorzugt Wasserstoffperoxid, führt bereits zu einem Leimharz. Die optimalen Mengenverhältnisse können leicht ermittelt werden. Hierfür spielt auch die chemische Struktur des Substrats eine Rolle.

In bevorzugten Ausführungsformen ist das Bindemittel frei von Harnstoff. Mit Harnstoff, jedoch ohne Formaldehyd, wird nur eine schwächere Klebkraft erzielt.

In Weiterbildung der Erfindung ist vorgesehen, zusätzlich zu den bislang beschriebenen Bestandteilen noch eine Proteinkomponente in dem Bindemittel vorzusehen. Proteine umfassen hierbei Polypeptide. Diese Proteinkomponente verstärkt die vernetzte Molekülstruktur, die sich in dem Bindemittel und zwischen Bindemittel und cellulosehaltigem Material bzw. Substrat ausbildet, zusätzlich. Zugleich gibt sie dem Kleber Struktur und kann als Füllmasse dienen. Wenn das Aldehyd (und/oder Keton) mit der Proteinkomponente in Verbindung kommt, reagieren dessen Carbonyl- und Hydroxylgruppen mit funktionellen Gruppen des Proteins. Es kommt zu Kondensations- und Veresterungsreaktionen.

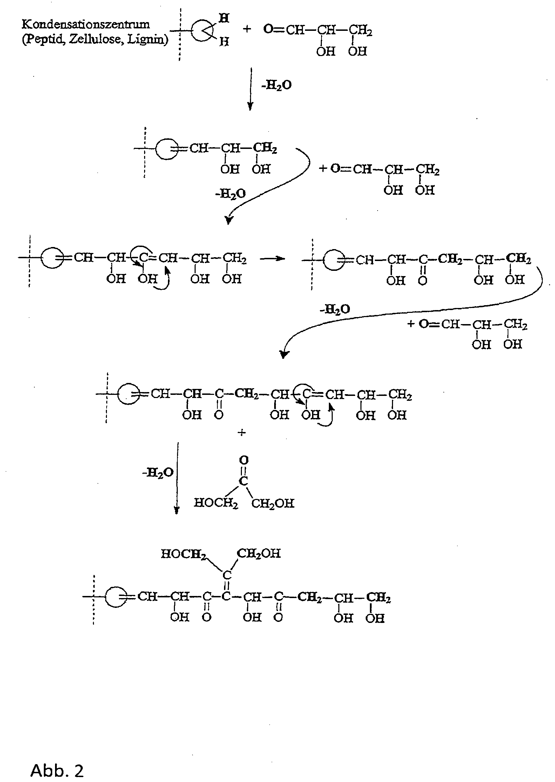

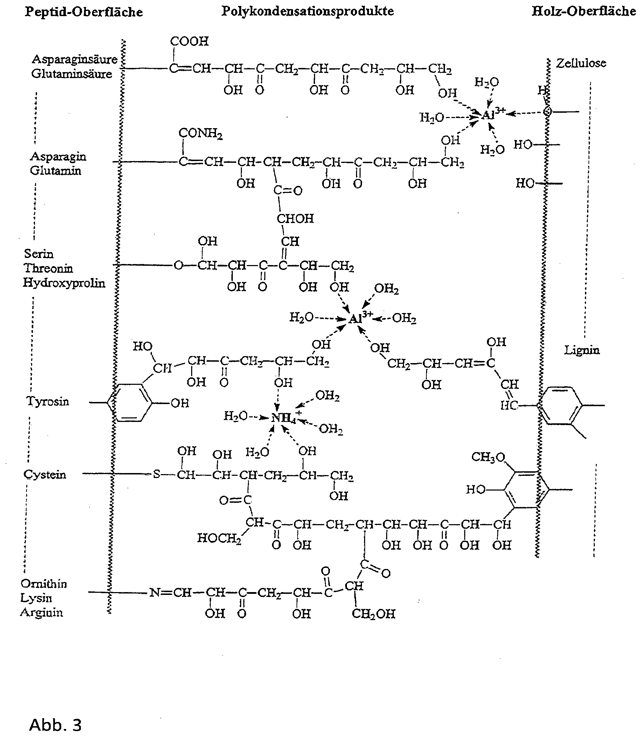

Die chemischen Zusammenhänge sind summarisch und stark vereinfacht in den Schemata nach Abbildungen 1 bis 3 veranschaulicht. Das Reaktionsgeschehen ist in der Natur - auch durch Zusammensetzungsschwankungen - sehr viel komplexer und kann hier nur grob vereinfacht wiedergegeben werden; dies soll lediglich das prinzipielle Verständnis der Erfindung erleichtern.

Die Anwesenheit des Proteins bietet entscheidende Vorteile. Als Makromolekül bietet das Protein eine Oberfläche, auf der viele Glyzerineinheiten binden können, die wiederum mit Hilfe der NH-Komponente, dem Ammonium, vernetzen. Zusätzlich können Amin- und Amidfunktionen des Proteins mit den Carbonylgruppen des Aldehyds/Ketons reagieren. Hydroxylgruppen des Aldehyds oder Ketons können mit Säurefunktionen des Proteins verestern usw. Die Steifigkeit der vernetzten Molekülstrukturen in dem Bindemittel wird dadurch erhöht, bzw. der Vernetzungsgrad insgesamt erhöht.

Das Protein oder die Proteine der Proteinkomponente liegen bevorzugt denaturiert in dem Bindemittel vor. Dies wird alternativ durch verschiedene Inhaltsstoffe sowie den pH-Wert bewirkt. Besonders effektiv wird das Protein durch Wasserstoffperoxid denaturiert, aber auch durch Tensid-Additive, sofern vorhanden.

Die Proteinkomponente verbessert die Vernetzung mit dem cellulosehaltigen Material, das gebunden werden soll.

Für die Proteinkomponente kann im Grunde jeder preisgünstig zur Verfügung stehende, überwiegend bzw. ausreichend proteinhaltige Stoff eingesetzt werden. Bevorzugt basiert die Proteinkomponente auf Tierblut, d.h. sie wird aus Tierblut gewonnen, wobei andere Zumischungen vorhanden sein können, und enthält vorzugsweise Hämoglobin aus Tierblut oder Proteinkonzentrat aus Tierblut. Besonders bevorzugt ist Tierblutpulver, z.B. Tiervollblutpulver, d.h. getrocknetes Tierblut und insbesondere Tierblutpulver aus Kategorie 3 Tierblut, Plasmapulver oder Hämoglobinpulver.

Hämoglobin fördert den Oxidationsprozess des Polyols mit dem Oxidationsmittel durch Anwesenheit von Eisen(II). Ausgehend von der Peptidoberfläche bildet sich über das Aldehyd und/oder Keton mit der NH-Komponente ein bindendes Netzwerk aus.

Erfindungsgemäß werden Ammoniumverbindungen als NH-reaktive Verbindungen genutzt, die sich in folgender Weise an Carbonylgruppen addieren:

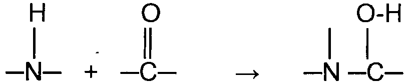

Diese ersten Primärprodukte kondensieren, auch im Netzwerk mit den anderen Partnern, zu dem Bindemittelharz.

Bevorzugte Ammoniumsalze im Sinne dieser Erfindung sind Salze aus der Gruppe:
Ammoniumsulfat, Ammoniumalaune, insbesondere Ammoniumaluminium-Doppelsalz, das als Dodekahydrat kubisch kristallisiert, wie alle Alaune, Ammoniumligninsulfonat und Ammoniumhydrogenphosphat. Alle diese Salze sind kommerziell erhältlich, verfügbar und nicht zu teuer.

Es wird entweder ein Salz aus dieser Gruppe für das Bindemittel ausgewählt, oder es wird eine Mischung aus Salzen der vorgenannten Gruppe eingesetzt.

In einer besonders bevorzugten Ausführungsform beträgt der Gehalt des Ammoniumsalzes wenigstens 50 Gew.-% bezogen auf alle stickstoffhaltigen, zur Vernetzung mit Hydroxyaldehyden befähigten Bestandteile - d.h. der NH-reaktiven Bestandteile, wie oben beschrieben - jedoch ohne Berücksichtigung der optional vorhandenen Proteinkomponente. Bei Berücksichtigung der Proteinkomponente innerhalb der Menge der NH-reaktiven übrigen Bestandteile, außer Ammonium, beträgt der Ammoniumsalzgehalt wenigstens 25 Gew.-%

Das erfindungsgemäß eingesetzte Ammoniumsalz kann durch eine zusätzliche Amin- oder Amidkomponente ergänzt oder teilweise, bis zu maximal 50 Gew.-%, ersetzt werden. Bevorzugt findet eine Ergänzung durch Melamin statt. Harnstoff ist hingegen als Ergänzung zum Ammoniumsalz nicht bevorzugt, vielmehr ist das Bindemittel vorzugsweise harnstofffrei.

Der Gewichtsanteil der Summe aller stickstoffhaltigen, zur Verbindung (Addition) und Vernetzung mit Hydroxyaldehyden befähigten Bestandteile, einschließlich des Ammoniumsalzes, ausschließlich von Proteinen, beträgt wenigstens 15 Gew.-% des Bindemittels.

Nach einer besonders bevorzugten, speziellen Ausführungsform besteht das Bindemittel aus den Bestandteilen:
Wasser, mit einem Gehalt von maximal 48 Gew.%,
wenigstens ein Ammoniumsalz,
Glyzerin,
Wasserstoffperoxid,
einer Proteinkomponente,
optional einem zusätzlichen Amin oder Amid sowie
optional Zusatz- und Hilfsstoffen (Additiven).

Der Glyzeringehalt liegt in bevorzugten Ausführungsformen zwischen 5 und 40 Gew.-% bezogen auf das unverdünnte Bindemittel, wie es nachfolgend mit Hilfe von Beispielen dargestellt ist.

Wasserstoffperoxid wird in den Beispielen in 35 %iger Lösung eingesetzt. Vorzugsweise beträgt der Wasserstoffperoxidgehalt in Absolutwerten zwischen 1 und 10 Gew.-% im unverdünnten Bindemittel (alle Prozentwerte sind Gewichtsprozente, soweit nicht anders angegeben).

Die Proteinkomponente ist vorzugsweise in einer Menge von bis zu 20 Gew.-%, weiter vorzugsweise bis zu 15 Gew.-% enthalten. In den Beispielen werden zwischen 4 und 10 Gew.-% verwendet. Selbstverständlich können auch geringere Mengen von beispielsweise unter 1 %, oder 1 bis 4 % für bestimmte Anwendungen sinnvoll sein.

Additive, wie beispielsweise Mittel zur besseren Benetzung des Substrats (Netzmittel), Entschäumer, Verdickungsmittel, Glättmittel, Flammschutzmittel usw. können dem Bindemittel in geeigneten Mengen, die üblicherweise 5 Gew.-% nicht übersteigen, zugesetzt werden. Der Zusatz von Additiven kann dem Fachmann überlassen werden, geeignete Mittel sind kommerziell erhältlich.

Mögliche konkrete Additive sind: Tenside, Polyasparaginat als Tensidzusatz, Entschäumermischungen, Paraffine, Verdickungsmittel wie Gelatine oder 2-Hydroxyethylmethylether. Farbstoffe.

Das Bindemittel ist in auftragsfertiger Form, d.h. fertig gemischt, mit allen seinen Bestandteilen, lager- und transportgeeignet. Die Lagerfähigkeit besteht über Monate. Das Bindemittel - ein Bindemittelleim oder "Leimharz" - ist daher grundsätzlich ein 1-Komponenten-Leim oder -klebstoff. Es bleibt dem Fachmann unbenommen, die Bestandteile des Mittels auf zwei Komponenten aufzuteilen und so einen 2K-Leim oder -Klebstoff zu erhalten. Ein Beispiel hierfür ist in Anwendungsbeispiel 6 ausgeführt.

Das Bindemittel wird vorzugsweise in seiner unverdünnten Leim-Grundform eingesetzt. Die Beispiele illustrieren dies in nicht beschränkender Weise. Für bestimmte Zwecke - beispielsweise als Vorstrich - kann das Bindemittel auch verdünnt werden. Es kann auch getrocknet vorliegen.

Das Bindemittel kann auf allen gängigen Verarbeitungsmaschinen, automatisierten Fertigungsanlagen aber auch Handpressen eingesetzt werden. Es bindet mit den zellulosehaltigen Komponenten unter Wärme und ggf. bei der Verarbeitung eingebrachten Druck ab. Das Verpressen erfolgt vorzugsweise bei Temperaturen von > 100 °C bis 250 °C und in für die jeweiligen Verarbeitungsverfahren üblichen Druckbereichen bis vorzugsweise ca. 180 bar.

Über Wärmezufuhr und Druck sind die Verarbeitungszeit und das Abbindeverhalten gut einstellbar. Beispielsweise ist die Presszeit für Platten abhängig von der Art des zellulosehaltigen Substrats, der Presstemperatur, dem Pressdruck und auch von der Dicke (Höhe) der herzustellenden Verbundstoffplatten. Alle diese Zusammenhänge sind dem Fachmann bekannt und brauchen daher nicht näher ausgeführt zu werden.

Ein besonderer Vorteil der Erfindung ist die Verringerung der Presszeiten auf kontinuierlichen Pressen. Presszeiten unter 10 Sekunden pro 1 mm Plattendicke sind realisierbar.

Das erfindungsgemäße Bindemittel ist außerdem im handwerklichen und Bereich als Holzleim verwendbar, wie oben ausgeführt als 1K-, aber auch als 2K-Leim.

Die Erfindung umfasst auch die Verbundwerkstoffprodukte selbst, die durch Binden eines cellulosehaltigen Ausgangsmaterials mit dem neuen Bindemittel und Formen zu einem Produkt erhalten werden können. Dies beinhaltet alle solchen Produktformen, wie mit konventionellen Leimharzen erhältlich. U.a. Produkte für die Möbelindustrie, z.B. Möbelplatten, Baustoffplatten und Wärmedämmplatten, staubgebundene Recycling-Produkte und Recycling-Papier-Platten.

Die Verbundwerkstoffprodukte nach dieser Erfindung sind allgemein durch Binden eines cellulosehaltigen Ausgangsmaterials mit dem erfindungsgemäßen Bindemittel und Formen zu einem Produkt erhältlich. Dies ergibt allgemein einen Formkörper. Dabei sind alle im Stand der Technik bekannten und gängigen Verfahren auch mit dem Bindemittel nach dieser Erfindung ausführbar. Bestehende Verarbeitungsanlagen können ohne besondere Maßnahmen eingesetzt werden. Das Formen geschieht im Allgemeinen wie bisher schon üblich, unter Wärme und Druck. Dabei werden z.B. die oben bereits aufgeführten Platten oder auch andere Körper, wie Ziegel usw. erhalten.

Das cellulosehaltige Ausgangsmaterial für das Verbundwerkstoffprodukt ist bevorzugt Holz und/oder Papier. Das Verbundwerkstoffprodukt besitzt insbesondere die Form von Platten Holzplatten, Pressplatten aus Spänekuchen, Flakes und dergleichen, insbesondere Spanplatten, Laminaten, MDF, OSB und Lagenholz, aber auch Strohplatten (s. Beispiel) oder anderen Naturfaserplatten z.B. im Baubereich als Dämmmaterial (Hanfplatten u.a.).

Im Folgenden wird die Erfindung anhand von Beispielen näher erläutert, die rein illustrativen Charakter haben und dem besseren Verständnis der Erfindung dienen sollen.

### BEISPIELE

Es werden neun Bindemittelleime angesetzt. Die Zusammensetzungen sind in Tabelle 1 gezeigt.

**Tabelle 1**

| Beispiel | 1 | 2 | 3 | 4 | 5 | 6 | 7 | 8 | 9 |
|---|---|---|---|---|---|---|---|---|---|
| *1) 60 %ige wässrige Salzlösung für* ... *Gew%-Gehalt im Bindemittelleim* Ammoniumsulfat | 41,4 | - | 9,3 | 28,8 | 15,0 | 9,6 | 25,8 | 32,4 | - |
| Ammoniumalaun | - | 41,4 | 9,3 | - | - | 9,6 | - | - | - |
| | | | | | | | | | |
| *2) **Bindemittelleim** mit folgenden Bestandteilen:* | | | | | | | | | |
| Lösung aus 1) (Gew.-%) | 69 | 69 | 31 | 48 | 25 | 32 | 43 | 54 | 25 H₂O |
| *weitere N-Komponenten:* | | | | | | | | | |
| Ammoniumligninsulfonat | | | | 14 | 20 | | 25 | 10 | 40 |
| Ammoniumhydrogenphosphat | | | | | 20 | | | | |
| Melamin | | | | | | | | 20 | |
| Glyzerin (85 %ig) | 15 | 15 | 38 | 12 | 10 | 40 | 10 | 8 | 15 |
| Wasserstoffperoxid (35%iq) | 12 | 12 | 20 | 14 | 10 | 20 | 12 | 6 | 10 |
| Proteinkomponente (fest) | 4 | 4 | 8 | 10 | 10 | 8 | 10 | 4 | 10 |
| *Additive:* | | | | | | | | | |
| Tensid, Schwego foam 6305® (mit Polyasparaginat) | | | 2 | 1 | | 1 | | | |
| Paraffin-Lösung ***(ethanolisch)** Hydro Wax Fa. Sasol* | | | 1 | 1 | 2 | 1 | | 2 | |
| Gelatine | | | | | 3 | | | | |

| | | | | | | | | | |
|---|---|---|---|---|---|---|---|---|---|
| (alle Angaben in Gew.-%) | | | | | | | | | |

Zunächst wird jeweils eine 60 (Gew.-)%ige wässrige Ammoniumsalzlösung hergestellt, sofern das Rezept Ammoniumsulfat oder Ammoniumaluminiumsulfat-Dodekahydrat (oder einem anderen Ammoniumalaun) enthält. Bei höheren Ammoniumsalzgehalten kann dies in der Wärme geschehen. In Tabelle 1 sind unter 1) die Gehalte an Ammoniumsulfat und/oder Ammoniumalaun im Bindemittelleim angegeben, die sich ergeben, wenn die darunter angegebene Menge der wässrigen Lösung aus 1) für die Zusammensetzung verwendet wird.

Für Beispiel 6, das kein Ammoniumsulfat und keinen Ammoniumalaun enthält, wird zunächst das Ammoniumligninsulfonat in Wasser gelöst, dann werden die weiteren Komponenten hinzugegeben.

Die in Tabelle 1 angegebenen Bindemittelleim-Beispiele lassen sich vielfältig verwenden. Sie binden Holz, Papier und andere zellulosehaltige Naturfasern sowie auch synthetische Zellstoffprodukte. Einige Gebrauchsmöglichkeiten sind in den nachfolgenden Anwendungsbeispielen angegeben.

### ANWENDUNGSBEISPIELE

### Anwendungsbeispiel 1

Zum Herstellen einer Spanplatte werden Fichtenholzspäne mit einem Restfeuchteanteil von 2 % mit einem formaldehydfreien Bindemittel nach dieser Erfindung gemischt.

Der Masseanteil der Späne beträgt 92 % (Gew.-%).

Das Bindemittelgemisch ist einkomponentig. Bei allen Beispielen liegt der Feststoffgehalt über 50 %, d.h. der Wassergehalt des Bindemittelleimes unter 50 %. Zum Feststoffgehalt zählen alle anorganischen und organischen Bestandteile des Leims, einschließlich Glyzerin, ausschließlich Wasserstoffperoxid und Wasser. Die Mischung erfolgt im Sprühverfahren, um eine gleichmäßige Benetzung zu erreichen. Der Bindemittelanteil beträgt bezogen auf den Festkörpergehalt 8 % vom spezifischen Gewicht der Platte.

Die mit dem Bindemittel benetzten Späne werden gleichmäßig auf ein Pressblech gestreut, so dass ein Spänekuchen entsteht. Der Spänekuchen wird in einer Plattenpresse bei einer Temperatur von 180 °C über einen Zeitraum von 180 Sek. verpresst, sodass eine Spanplatte mit einer Dicke von 12 mm entsteht. Der Pressdruck wird auf 150 bar eingestellt. Eine derart hergestellte Spanplatte ist emissionsfrei.

Die technischen Werte der DIN ISO EN 312:210 Typ P2 wurden erreicht.

### Variante

Dem Bindemittel können bis max. 10 Gew.-% einer 1-molaren Lösung von Kaliumhydroxid (KOH), Natriumhydroxid (NaOH) oder Calciumhydroxid (Ca(OH)₂) zugegeben werden.

### Anwendungsbeispiel 2

Zum Herstellen einer 12 mm dicken OSB (oriented strand board) werden "Flakes" mit einer Holzfeuchte von 2-4 % benötigt, welche mit einem einkomponentigen Bindemittel aus dem Beispielteil (s. Tab. 1) per Trommelverfahren benetzt werden.

Bezogen auf das spezifische Gewicht der Flakes und auf den Festkörperanteil des Bindemittels werden 10 % Bindemittel verarbeitet.

Die mit dem Liquid benetzten Flakes werden zu einem Kuchen gestreut und zum Verpressen in einer Plattenpresse eingelegt. Anschließend wird der Flakes-Kuchen bei einer Temperatur von 180 °C und einem Druck von 165 bar über einen Zeitraum von 180 Sek. zu einer OSB-Platte verpresst.

Die technischen Werte der DIN ISO EN 312:210 Typ P2 wurden erreicht.

### Anwendungsbeispiel 3

Zum Herstellen einer Dünnspanplatte, bspw. nach dem Mendeverfahren auf einem Kalander, mit einem spez. Gewicht von 780 kg/m³ werden die Späne in einem Lödige Trommelmischer mit 143 kg Bindemittelansatz aus dem Beispielteil benetzt. Um die technischen Werte der EN Norm zu erhalten, muss ein Bindemittelanteil, bezogen auf den Festkörpergehalt, von 11 % erreicht werden.

Die 3,0 mm Platte wird in einer Zeit von 30 Sek. bei 140 bar Druck und einer Temperatur von 175 °C verpresst.

Die technischen Werte der DIN ISO EN 312:210 Typ P2 wurden erreicht.

### Anwendungsbeispiel 4

Zum Herstellen einer Spanplatte wird ein Spänekuchen gebildet. Der Masseanteil der feuchten Späne beträgt 92 % mit einer Restfeuchte von 2 %. Es wird ein Bindemittelleim mit einem Wasseranteil < 40 % ausgewählt. Das Bindemittel wird per Sprühverfahren aufgebracht. Der Bindemittelanteil beträgt bezogen auf den Festkörpergehalt 8 % vom spezifischen Gewicht der Platte. Bei einer Temperatur von 200 °C und einem Druck von 155 bar und einer Presszeit von 12 Sek. / mm Plattendicke wird der Spänekuchen in einer Einetagenpresse verpresst.

Die technischen Werte der DIN ISO EN 312:210 Typ P2 wurden erreicht.

### Anwendungsbeispiel 5

Zum Herstellen einer MDF Platte werden die über einen Refiner getrockneten Holzfasern (1 % Holzfeuchte) mittels Trommelbeleimung im Sprühverfahren mit einem einkomponentigen formaldehydfreien Bindemittel nach der Erfindung benetzt.. Der Masseanteil der Holzfasern beträgt 90 %; der Bindemittelanteil beträgt bezogen auf den Festkörperanteil 10 %.

Die benetzten Holzfasern werden bei 185 °C und einem Druck von 140 bar verpresst. Die Presszeit in einer kontinuierlichen Presse beträgt 8 Sek. pro 1 mm Plattendicke. (eine 6 mm-Platte wird in 48 Sek. produziert.)

### Anwendungsbeispiel 6

Der Bindemittelleim aus Beispiel 1 wird zweikomponentig hergestellt.
Leimkomponente 1: Mischung aus wässriger Ammoniumalaunlösung und Wasserstoffperoxid;
Leimkomponente 2: Mischung aus 85 %igem Glyzerin und Proteinkonzentrat der Fa. Saval®.

Zum Herstellen von Sperrholzplatten (Lagenholz) werden 2 mm dicke Birkenfurniere bereitgestellt. Auf einer Seite eines Birkenfurniers wird Leimkomponente 1, die sehr dünnflüssig ist, aufgespritzt. Auf eine weitere Oberseite eines zweiten Birkenfurniers wird mit einer Auftragsmenge von 40 g/m² die Leimkomponente 2 aufgewalzt. Anschließend werden die beiden Oberseiten der Birkenfurniere kreuzweise aufeinandergelegt und bei einer Presstemperatur von 170 °C und einem Druck von 65 bar für eine Zeit von ca. 120 Sekunden miteinander verpresst.

### Anwendungsbeispiel 7

Zum Herstellen einer furnierten Fläche wird mittels einer einseitigen Leimauftragswalze ein einkomponentiges Bindemittel nach der Erfindung auf die Trägerplatte, in diesem Fall eine Spanplatte, mit 80 g/m² aufgetragen.

Das Furnier, in diesem Fall Eichenfurnier mit einer Dicke von 0,6 mm, wird ganzflächig auf die beleimte Trägerplatte gelegt und in einer Furnierpresse mit 70 N/mm² Pressdruck 90 Sek. lang verpresst.

### Variante

Das Bindemittel wird vor dem Auftrag mit bis zu 10 Gew.-%

Weizenmehl oder Stärke (vorzugsweise Mais oder Sojastärke) gestreckt, um den Feststoffgehalt zu erhöhen und den sogenannten "Leimdurchschlag" zu verhindern.

### Anwendungsbeispiel 8

Zum Herstellen einer 22 mm Spanplatte wird ein Spänekuchen gebildet.

Der Masseanteil der feuchten Späne beträgt 90 % mit einer Restfeuchte von 2 - 4 %. Das Bindemittel hat einen Feststoffgehalt von ca. 63 %.

Der Bindemittelanteil beträgt bezogen auf den Festkörpergehalt 10 % vom spezifischen Gewicht der Platte (680 kg/m³ Gewicht der fertigen Platte, 68 kg Festkörperanteil des Bindemittels, 108 kg flüssiges Bindemittel).

Das Bindemittel wird im Sprühverfahren aufgetragen.

Der Spänekuchen wird bei einer Temperatur von 210 °C und einem Druck von 150 bar und einer Presszeit von 220 Sek. in einer Einetagenpresse verpresst.

### Anwendungsbeispiel 9 (Strohplatte)

Es wird ein einkomponentiges Bindemittel nach Beispiel 9 eingesetzt.

Die Länge der Strohfasern sollte max. 20 mm betragen

Das Liquid wird mittels eines Lödige Pflugscharmischers aufgebracht.

Der Masseanteil der Strohfasern beträgt 90 %;
das Bindemittel bezogen auf den Festkörperanteil 10 %.

Die benetzten Strohfasern werden bei 165 °C und einem Druck von 160 bar verpresst. Die Presszeit in einer Einetagenpresse beträgt 15 Sek. pro 1 mm Plattendicke.

Es wurde eine Leichtbau-Platte von 30 mm Dicke mit einem spez. Gewicht von 280 kg/m³ hergestellt.

Anstelle des Strohs können auch andere zellulosehaltige Fasern (vorzugsweise junger Pflanzen) oder Recycling-Papiere verwendet werden.

### Anmerkung:

Strohplatten können nicht mit herkömmlichem Harnstoff-Formaldehyd-Bindemittel verklebt werden, da die Außenhaut des Strohs paraffin-haltig ist und eine hohe Trennwirkung gegenüber diesem Bindemittel aufweist. Deshalb werden Strohplatten mit Isocyanaten (PDMI) hergestellt.

Das formaldehydfreie Bindemittel nach der Erfindung, insbesondere gemäß Beispiel 9 löst die Paraffinstruktur der Strohhalme und ermöglicht die Vernetzung zur Platte.

### Formaldehydprüfung :

Es wurde eine Formaldehyd-Prüfung im Institut für Holztechnologie Posen durchgeführt.

Test Report Nr.: 371/2016/S.F. vom 25.02.2016

Die sechs Dreischicht-Spanplatten hatten ein Format von 290 mm x 290 mm x 6 mm und wurden hergestellt mit einem Bindemittel des Beispiels Nr. 4.

Dreischicht-Spanplatten (EO P1 CE) wurden nach der EN 717-1:2006 (Kammermethode) 10 Tage lang geprüft.

Die 9 Messungen ergaben folgende Werte:
0,022 / 0,017 / 0,013 / 0,008 / 0,007 / 0,008 / 0,008 / 0,008 / 0,008 ppm Formaldehydemission.

Laut Norm (EN 120 / CARB Norm) darf die Formaldehydemission unter diesen Bedingungen 0,1 ppm (ml/m³) nicht überschreiten.

Die gemessenen Werte lagen weit darunter und entstammen der Organik des Holzes.

Dies zeigt, dass während des Abbindens keinerlei Spaltungsreaktionen unter Formaldehydfreisetzung oder anderer schädlicher Emissionen stattfinden können.

Die erhaltene neue Platte ist vollständig Formaldehyd-emissionsfrei im Sinne der Norm EN 120/CARB Norm.

## Patentansprüche

1. Formaldehydfreies Bindemittel für cellulosehaltige Materialien, **dadurch gekennzeichnet, dass** es ein mit einem Ammoniumsalz polykondensiertes Hydroxyaldehyd-Harz enthält.

2. Formaldehydfreies Bindemittel nach Anspruch 1, **dadurch gekennzeichnet, dass** das Hydroxyaldehyd für das Bindemittelharz ein Kohlenhydrataldehyd und insbesondere Glyzerinaldehyd ist.

3. Formaldehydfreies Bindemittel nach Anspruch 1 oder 2, **dadurch gekennzeichnet, dass** das Hydroxyaldehyd mit einem Oxidationsmittel, wie insbesondere einem Peroxid aus einer wenigstens difunktionellen Hydroxyverbindung, gebildet wird.

4. Formaldehydfreies Bindemittel nach einem der Ansprüche 1 bis 3, **dadurch gekennzeichnet, dass** es harnstofffrei ist.

5. Formaldehydfreies Bindemittel nach einem der Ansprüche 1 bis 4, **dadurch gekennzeichnet, dass** es eine Proteinkomponente enthält.

6. Formaldehydfreies Bindemittel nach Anspruch 5, **dadurch gekennzeichnet, dass** die Proteinkomponente auf Tierblut basiert und vorzugsweise Hämoglobin aus Tierblut oder Proteinkonzentrat aus Tierblut enthält

7. Formaldehydfreies Bindemittel nach einem der Ansprüche 1 bis 6, **dadurch gekennzeichnet, dass** das Ammoniumsalz ein einzelnes Salz oder ein Gemisch aus Salzen ist, ausgewählt aus der Gruppe: Ammoniumsulfat, Ammoniumalaune, insbesondere Ammoniumaluminium-Doppelsalz, Ammoniumligninsulfonat und Ammoniumhydrogenphosphat.

8. Formaldehydfreies Bindemittel nach einem der Ansprüche 1 bis 7, **dadurch gekennzeichnet, dass** das Ammoniumsalz wenigstens 50 Gew.-% bezogen auf alle stickstoffhaltigen, zur Vernetzung mit Hydroxyaldehyden befähigten Bestandteile ohne Berücksichtigung der optional vorhandenen Proteinkomponente ausmacht, wobei insbesondere ein Melamin-Anteil enthalten sein kann.

9. Formaldehydfreies Bindemittel nach Anspruch 8, **dadurch gekennzeichnet, dass** der Gewichtsanteil der Summe aller stickstoffhaltigen, zur Vernetzung mit Hydroxyaldehyden befähigten Bestandteile, einschließlich des Ammoniumsalzes, ausschließlich von Proteinen, wenigstens 15 Gew.-% des Bindemittels beträgt.

10. Formaldehydfreies Bindemittel nach Anspruch 8 oder 9, **dadurch gekennzeichnet, dass** es Wasser in einem Gehalt von maximal 48 Gew.-%, wenigstens ein Ammoniumsalz, Glyzerin, Wasserstoffperoxid, die Proteinkomponente, optional ein zusätzliches Amin oder Amid sowie optional Zusatz- und Hilfsstoffe enthält.

11. Formaldehydfreies Bindemittel nach einem der Ansprüche 1 bis 10, **dadurch gekennzeichnet, dass** es ein Zwei- oder Mehrkomponenten-Bindemittel ist, dessen Komponenten unmittelbar vor der Verwendung gemischt oder separat aufgetragen werden.

12. Verbundwerkstoffprodukt, erhältlich durch Binden eines cellulosehaltigen Ausgangsmaterials mit dem Bindemittel nach einem der Ansprüche 1 bis 11 und Formen zu einem Produkt.

13. Verbundwerkstoffprodukt nach Anspruch 12, **dadurch gekennzeichnet, dass** das Ausgangsmaterial Holz und/oder Papier ist.

14. Verbundwerkstoffprodukt nach Anspruch 12 oder 13, **dadurch gekennzeichnet, dass** es plattenförmig ist, vorzugsweise eine Pressplatte oder ein Laminat.

## Claims

1. Formaldehyde-free binder for cellulose-containing materials, **characterized in that** it contains a hydroxyaldehyde resin which is polycondensed with an ammonium salt.

2. Formaldehyde-free binder according to claim 1, **characterized in that** the hydroxyaldehyde for the binder resin is a carbohydrate aldehyde and in particular glyceraldehyde.

3. Formaldehyde-free binder according to claim 1 or 2 **characterized in that** the hydroxyaldehyde is formed from at least one difunctional hydroxy compound with an oxidizing agent, such as in particular a peroxide.

4. Formaldehyde-free binder according to any one of claims 1 to 3, **characterized in that** it is free of urea.

5. Formaldehyde-free binder according to any one of claims 1 to 4, **characterized in that** it contains a protein component.

6. Formaldehyde-free binder according to claim 5, **characterized in that** the protein component is based on animal blood and in particular contains hemoglobin from animal blood or protein concentrate from animal blood.

7. Formaldehyde-free binder according to any one of claims 1 to 6, **characterized in that** the ammonium salt is a single salt or a mixture of salts selected from the group of ammonium sulfate, ammonium aluminum sulfate, in particular ammonium aluminum double salt, ammonium lignosulphonate and ammonium hydrogen phosphate.

8. Formaldehyde-free binder according to any one of claims 1 to 7, **characterized in that** the ammonium salt is at least 50 wt.-% relative to all nitrogen-containing components capable to cross-link with hydroxyaldehydes without considering the optionally present protein component, wherein in particular a melamine portion may be present.

9. Formaldehyde-free binder according to claim 8, **characterized in that** the weight portion of the sum of all nitrogen-containing components which are capable to cross-link with hydroxyaldehydes, including the ammonium salt and excluding proteins, is at least 15 wt.-% of the binder.

10. Formaldehyde-free binder according to claim 8 or 9, **characterized in that** it contains water in an amount of about 48 wt.-%, at least one ammonium salt, glycerol, hydrogen peroxide, the protein component, optionally an additional amine or amide as well as optionally additives and auxiliaries.

11. Formaldehyde-free binder according to any one of claims 1 to 10, **characterized in that** it is a two or multi-component binder, the components of which are mixed directly before its use or are applied separately.

12. Composite material product obtainable by binding a cellulose-containing starting material with a binder according to any one of claims 1 to 11 and shaping to a product.

13. Composite material product according to claim 12, **characterized in that** the starting material is wood and/or paper.

14. Composite material product according to claim 12 or 13, **characterized in that** it is plate-shaped, preferably a compressed board or a laminate.

## Revendications

1. Liant sans formaldéhyde pour matières contenant de la cellulose, **caractérisé en ce qu'**il contient une résine d'hydroxy-aldéhyde, formée par polycondensation avec un sel d'ammonium.

2. Liant sans formaldéhyde, conforme à la revendication 1, **caractérisé en ce que** l'hydroxy-aldéhyde de la résine de liant est un aldéhyde hydrate de carbone et en particulier du glycéraldéhyde.

3. Liant sans formaldéhyde, conforme à la revendication 1 ou 2, **caractérisé en ce que** l'hydroxy-aldéhyde est formé au moyen d'un agent oxydant, comme en particulier un peroxyde issu d'un composé hydroxylé au moins difonctionnel.

4. Liant sans formaldéhyde, conforme à l'une des revendications 1 à 3, **caractérisé en ce qu'**il est sans urée.

5. Liant sans formaldéhyde, conforme à l'une des revendications 1 à 4, **caractérisé en ce qu'**il contient un composant protéique.

6. Liant sans formaldéhyde, conforme à la revendication 5, **caractérisé en ce que** le composant protéique est à base de sang d'animal et contient de préférence une hémoglobine issue de sang d'animal ou un concentré protéique issu de sang d'animal.

7. Liant sans formaldéhyde, conforme à l'une des revendications 1 à 6, **caractérisé en ce que** le sel d'ammonium est un sel unique ou un mélange de sels, choisi(s) dans l'ensemble constitué par les suivants : sulfate d'ammonium, aluns d'ammonium, en particulier sel double d'ammonium et d'aluminium, lignine-sulfonate d'ammonium et hydrogénophosphate d'ammonium.

8. Liant sans formaldéhyde, conforme à l'une des revendications 1 à 7, **caractérisé en ce que** le sel d'ammonium y représente au moins 50 % en poids de tous les constituants azotés capables de réticulation avec l'hydroxy-aldéhyde, le composant protéique éventuellement présent n'étant pas pris en compte, et étant entendu que, en particulier, une partie mélamine peut y être contenue.

9. Liant sans formaldéhyde, conforme à la revendication 8, **caractérisé en ce que** la part en poids du total de tous les constituants azotés capables de réticulation avec l'hydroxy-aldéhyde, y compris le sel d'ammonium, mais non compris les protéines, représente au moins 15 % du poids du liant.

10. Liant sans formaldéhyde, conforme à la revendication 8 ou 9, **caractérisé en ce qu'**il contient de l'eau en une proportion d'au maximum 48 % en poids, au moins un sel d'ammonium, de la glycérine, du peroxyde d'hydrogène, le composant protéique, et en option, une amine ou un amide supplémentaire, ainsi que des adjuvants et auxiliaires optionnels.

11. Liant sans formaldéhyde, conforme à l'une des revendications 1 à 10, **caractérisé en ce qu'**il s'agit d'un liant en deux composants ou plus, dont les composants sont mélangés immédiatement avant l'emploi ou déposés séparément.

12. Produit en matériau composite, obtenu par liaison d'une matière première contenant de la cellulose au moyen d'un liant conforme à l'une des revendications 1 à 11 et façonnage en un produit.

13. Produit en matériau composite, conforme à la revendication 12, **caractérisé en ce que** la matière première est du bois et/ou du papier.

14. Produit en matériau composite, conforme à la revendication 12 ou 13, **caractérisé en ce qu'**il est en forme de plaque, de préférence une plaque d'aggloméré ou un stratifié.
